# EUROPEAN PATENT APPLICATION

(11) **EP 4 657 109 A1**
(43) Date of publication of application: **03.12.2025**
(21) Application number: 24178289.5
(22) Date of filing: 27.05.2024
(51) Int. Cl.: G01S 7/481, G01S 17/10, G01S 17/89

(54) **A TERRESTRIAL SCANNING INSTRUMENT AND A METHOD OF MULTIPLE TIME AROUND DISAMBIGUATION**

(71) Applicant: Hexagon Technology Center GmbH, 9435 Heerbrugg (CH)
(72) Inventor: STUTZ, Reto, CH-9434 AU (CH); ENGELER, Florian, 9403 Goldach (CH)
(74) Representative: Kaminski Harmann

(57) **Abstract**

A terrestrial multiple-time-around, MTA, scanner (10) for providing a point cloud comprises: a light pulse source for generating pulse trains comprising scanning pulses with corresponding repetition rate; a transmission unit to transmit the first scanning pulses and the second scanning pulses respective transmission directions, the transmission unit comprising a beam deflection element, angle sensors and elements for providing respective transmission times; an acquisition unit to acquire scanning pulses of the pulse train reflected from object points in the environment; and an evaluation unit to assign the acquisition events to the respective transmission events based on an MTA disambiguation. The scanning instrument carries out a scanning process comprising: (a) in a first circle (21), rotating the transmission direction with a first rotation speed and generating and transmitting scanning pulses of a first pulse train with a first repetition rate; and (b) in a second circle (20), rotating the transmission direction with a second rotation speed and generating and transmitting scanning pulses of a second pulse train with a second repetition rate. The second repetition rate is different from the first repetition rate. First (211) and second (221) circle object points provide information from essentially the same area representing a topography of an object (3). First (241) and second (242) tilting rotation speeds around a tilting (elevation) axis (24) are orders of magnitude faster than respective bearing rotation speeds (341, 342) about a bearing (azimuth) axis (34). Rotation directions in the first (211) and second (221) circles may be opposite.

## Description

### FIELD OF THE INVENTION

The present invention relates to a terrestrial scanning or profiling instrument, in particular a laser scanning or profiling instrument, comprising generation, transmission and detection units for a first and a second pulse train and a method for resolving the multiple time-around (MTA) ambiguity of the scanning data and a computer program product based on it.

### BACKGROUND OF THE INVENTION

To capture information on setting, in particular a surface of an object, in particular a building or a construction site, scanning methods are typically utilized. The setting is typically represented by a contiguous point cloud, in particular a point cloud with at least 100 points per millisteradian (msr), or in other words 10 points/m2 at 100 m from the scanner. Generic scanning instruments scan the setting with a scanning beam, in particular a laser-beam. The point cloud representing the setting is generated by combining the measured distance information with an emission angle of the scanning beam. In case of a scanning instrument the emission angle is typically represented by a polar angle and an azimuth angle.

The capturing of the point cloud might also be carried out during a spatial movement of the measuring apparatus. The own movement of the measuring apparatus, respectively the movement of a mobile carrier, has to be acquired and merged with the scan data. Instruments configured for this task are often called profiling instrument. In case of a profiling instrument the emission angle is typically represented by a single rotation angle, wherein the rotation axis might be tilted in respectto the plane in which the carrier moves. By way of example scanning instruments represent a category of similar instruments, in particular including profilers. By way of example laser-based scanning instruments from here on represent generic scanning instruments. The specific features of other types of scanning or profiling instruments might be applied accordingly.

The distance information in contemporary scanning instruments, such as laser-scanners, profilers, rotating lasers, lidars, laser-tracker or geodetic survey instruments, is typically based on a time of flight measurement of the laser pulses. By way of example "individual pulses" represent the primitive pulse form, in particular a pulse with 100 ps to 3 ns pulse width, transmitted by the instrument. Scanning pulses might represent single individual pulses or sequences of individual pulses repeated periodically or quasi-periodically. Sequence of pulses wherein the individual pulses being shifted to each other with a regular, random, or quasi-random jitter might also be considered scanning pulses for the present invention.

For the detection of the laser pulses there are many known approaches in the prior art. In the so-called threshold method a laser pulse is considered as detected when the intensity of the detected radiation exceeds a threshold. Another possibility is a precise sampling of the electric signal produced by the detector via an analog-to-digital converter (ADC).

Contemporary electronic components enable very high pulse repetition rates, however an increase of pulse repetition rates gives rise to the so-called multiple-time-around (MTA), also called problem multiple-pulses-in-air (MPiA), problem. The MTA problem occurs when the pulse repetition frequency is so high that a time between transmitted scanning pulses is shorter than a time required for an echo to return to the sensor. In this case, a reflected pulse from a particular transmitted pulse may arrive at the detector only after several other intervening transmitted scanning pulses have been sent. The acquired pulse must be assigned to the original transmission event to enable a correct range measurement. The process of this assignment is often referred to as MTA or MPiA disambiguation and the assignment itself is often referred to as the acquired pulse's ambiguity, MTA, or MPiA zone. For example, if an acquired pulse is assigned to the transmitted pulse immediately preceding it, it is assigned to ambiguity zone zero, and an ambiguity zone of twenty indicates that there are twenty intervening transmitted scanning pulses.

Given a pair of consecutive transmitted scanning pulses, the echo of the latter may arrive at the acquisition unit before the former if it has been reflected from a target that is closer to the detector by a wide enough margin to allow the previously transmitted pulse to arrive first. Thus, scanning pulses returning to the laser scanner may mix with one another, i.e. return with a different sequence than with which they were transmitted. This may be caused by distance jumps, i.e. a distance change between a first and a second object exceeding the ambiguity distance. Such distance jumps are typical by scanning e.g. in urban or forested areas, where the ambiguity zone may rapidly change as the scanning laser passes onto and off of walls of buildings or trees.

The prior art offers some solutions for the ambiguity resolution. E.g. it is known from US 6,031,601 A that for distance measurement a polychromatic or monochromatic light source is modulated by means of a pseudo-randomized number code generator. The light received from the target is decoded according to the coding and the distance is calculated from it. This solution has the disadvantage that the generated random noise coding sequences have a large duty cycle, i.e. a large ratio of pulse duration to period duration. This means that maximum repetition rate is not determined by the resolution of the pulse generation unit and/or the ADC but the length of the code. Another drawback arises due to the length of the code itself and the fact that all returns from the same sequence will be assigned to the same ambiguity zone. Thus, especially in the case of distance jumps the method might be unable to resolve the unambiguity. This approach has a further drawback that the computational complexity rises with the number of ambiguity zones that must be accommodated, in particular the MTA disambiguation have to be carried out for each scanning pulse. Furthermore, for more ambiguity zones more codes are required and the code sequences must also be longer to maintain a consistent signal to noise ratio.

### OBJECT OF THE INVENTION

In view of the above circumstances, the object of the present invention is to provide a more efficient unambiguity resolution method for a terrestrial scanning or profiling instrument. Further the unambiguity resolution method shall exhibit flexibility in the computational complexity, i.e. it shall perform sophisticated computing only when the unambiguity resolution requires it.

These objectives are achieved by realizing the characterizing features of the independent claims. Features, which further develop the invention in an alternative or advantageous manner are described in the dependent patent claims.

### SUMMARY OF THE INVENTION

A first aspect of the present invention relates to a terrestrial MTA scanning instrument configured to provide a point cloud representing an environment. The scanning instrument is configured to provide the point cloud by measuring a time of flight of an electromagnetic pulse, in particular a laser pulse, reflected from a plurality of object points in the environment. Object points according to the present invention are non-distinguished points (a) visible from the scanning instrument (b) laying on the surface of the objects comprised by the environment (c) forming a contiguous point cloud, in particular a point cloud with at least 100 point per msr density.

The scanning instrument comprises a light pulse source, a transmission unit, an acquisition unit, and an evaluation unit.

The light pulse source is configured to generate a first pulse train. The first pulse train comprises first scanning pulses at a first repetition rate. A first ambiguity distance defined by the first repetition rate is less than an envisaged measurement range. The first ambiguity distance might be defined such as half of the distance a pulse travels between the emission of two first scanning pulses of the first pulse train, i.e. the echo of a first scanning pulse of the first pulse train reflected from an object at the first ambiguity distance from the instrument reaches the instrument at the time when the subsequent first scanning pulse of the first pulse train is transmitted. In some embodiments the light pulse source comprises a first laser diode and the first pulse train consists of laser pulses. By way of example from here on only scanning instruments based on laser scanning are described in detail. The specific features of other types of scanning instruments, in particular profilers, might be applied accordingly.

Pulse train in the sense of the present invention means the totality of the individual pulses emitted. The first pulse train is substantially periodic, i.e. it comprises a base sequence of one or more individual pulses which are repeated with a first repetition rate. From here on a transmitted base sequence of the first pulse train is called as a first scanning pulse. A first scanning pulse of the first pulse train might comprise a single individual pulse. A first scanning pulse of the first pulse train might comprise a plurality of individual pulses with different amplitudes. The first scanning pulses of the first pulse train might be adjusted during the scanning process, in particular the amplitude of the individual pulses might be adjusted with respect to the reflectivity of the environment. From here on, unless otherwise specified, the first scanning pulses of the first pulse train are considered to be single individual pulses with a constant pulse shape. The specific features of complex first scanning pulses, in particular first scanning pulses having a sequence of individual pulses, might be applied accordingly.

The first repetition rate according to the present invention means the average number of first scanning pulses of the first pulse train emitted per unit of time. The first repetition rate might be considered to be frequency for strictly periodic first pulse trains. The first pulse train might show a slight variation, in particular a jitter, the first repetition rate can be regarded as a base frequency for such first pulse trains. By way of example, unless otherwise specified, the first pulse train is considered to be strictly periodic. The specific features of other types of first pulse trains, in particular first pulse trains with a jitter, might be applied accordingly. The first repetition rate might be at least 500 kHz, in particular 1 MHz or higher.

The light pulse source is further configured to generate a second pulse train. The second pulse train comprises second scanning pulses at a second repetition rate. The second pulse train is substantially similarto the first pulse train, and unless otherwise provided, the features of the first pulse train can be applied accordingly. The second scanning pulses of the second pulse train might have identical pulse characteristics to the first scanning pulses of the first pulse train.

The second scanning pulses of the second pulse train might be distinguishable from the first scanning pulses of the first pulse train, in particular by different wavelength and/or spectrum, different pulse energy, different pulse shape/width, or different pulse pattern. Even though this is an especially advantageous utilization of the present invention, the invention can be applied to cases where the first scanning pulses of the first pulse train and second scanning pulses of the second pulse train are indistinguishable as isolated pulses. The second pulse train as an ensemble is distinguishable from the first pulse train due to the difference in the second and first repetition rates.

The first and the second pulse trains might be generated by two similar, but essentially separate systems, e.g. separate laser diodes and drives. This approach is beneficial, as it allows the utilization of two laser diodes with different laser wavelength, thus the first and second pulses might be distinguishable from each other. The present invention can be equally applied to instruments wherein the light pulse source utilizes a single system, two systems with partially shared components or two separate systems for generating the first and the second pulse trains.

For scanning instruments according to the first aspect of the invention the second repetition rate is a proper fraction (e.g. 2:3, 3:5) of the first repetition rate and each second scanning pulse of the second pulse train are separated by finite time intervals from each first scanning pulse of the first pulse train. The second repetition rate might be a unit fraction of the first repetition rate, e.g. the second repetition rate might be 500 kHz for a first repetition rate of 2 MHz. Such embodiments are advantageous as the time interval between the second scanning pulses of the second pulse train and the respective first scanning pulses of the first pulse train is essentially the same. This allows an identification of the echo of second scanning pulses of the second pulse train e.g. by pattern recognition, in particular by correlating the acquisition sequence with the emission sequence. The inventive aspect is, however, not limited to these cases and it might also be applied for any proper fraction e.g. when the second repetition rate is 1.75 MHz for a first repetition rate of 2 MHz. Embodiments wherein the ratio of the second and first repetition rates are close to 1, in particular 5:6 or more, are advantageous as each first scanning pulse of the first pulse train has one or two nearest second scanning pulses of the second pulse train, which are separated by a time interval less than the time interval between two subsequent first scanning pulses of the first pulse train. The generation of the first and the second pulse trains is continuous, in particular the scanning is carried out in a single scanning mode.

The transmission unit is configured to transmit the first scanning pulses of the first pulse train and the second scanning pulses of the second pulse train along respective transmission directions. The transmission direction might be characterized by respective elevation and azimuth angles at the transmission of the pulses or a similar alternative. The transmission unit comprises a beam deflection element for varying the transmission direction at least by a rotation about a rotation axis. The beam deflection element might be a rotating mirror, in particular a fast-rotating mirror with at least 1000 rotation per minute (rpm) rotation speed, the rotation axis might be a horizontal tilting axis. The transmission unit might provide further rotational degrees of freedom, e.g. about a vertical bearing axis. Alternatively, further components of the scanning instrument, in particular a support unit, might provide further rotational degrees of freedom. The scanning instrument might be mounted on a mobile carrier providing translational degrees of freedom.

The transmission unit comprises angle sensors for providing data regarding the respective transmission directions of the transmitted first and second pulses. Said angle sensors provide data particularly on the state of the beam deflecting element. Instead of raw measurement data pre-processed data, e.g., calibrated angle data, might be provided by the angle sensors.

The transmission unit comprises elements, in particular in the form of an opto-electronic counter, to provide respective transmission times of the transmitted first and second pulses. The transmission times might be provided utilizing a trigger generated by the light pulse source. Alternatively, the transmission unit might comprise a separate optical path for providing a measurement for the transmission times. The present invention is not limited to any given means of providing the transmission times.

The acquisition unit is configured to acquire first scanning pulses of the first pulse train and second scanning pulses of the second pulse train reflected from object points in the environment. For each acquisition event an acquisition time is assigned. The object points representing the environment, in particular the density of the object points is above a threshold, in particular 100 points per msr. Reflection in the sense of the present invention means single, direct reflection of the scanning pulses. Object points might be reflecting mirror like or diffusely.

The acquisition unit might be angle resolved. The acquisition unit might comprise decoding elements, such decoding elements might analyze the shape of the acquired first scanning pulses of the first pulse train and provide an acquisition time based on the analysis, in particular fitting. Furthermore, the acquisition unit might distinguish the echoes of the first scanning pulses of the first pulse train and second scanning pulses of the second pulse train e.g. based on the pulse shape. While embodiments wherein the acquisition of the echoes of the first scanning pulses of the first pulse train and second scanning pulses of the second pulse train are distinguished are advantageous, this aspect of the invention might be applied to cases where such distinction is not possible and/or not performed.

The evaluation unit is configured to (1) assign to each first and second transmission event the respective transmission directions and times, (2) assign the acquisition events to the respective first and second transmission events, based on a MTA disambiguation utilizing the first and second repetition rates of the first and second pulse trains, (3) derive coordinates of the object points based on the assignment of the acquisition events to the respective first and second transmission events, (4) provide the point cloud representing the environment based on the determined coordinates of the object points. The MTA disambiguation might assign the acquisition events utilizing the time interval of the acquired echoes, in particular wherein the first scanning pulses of the first pulse train and second scanning pulses of the second pulse train are distinguishable based on the pulse characteristics of the isolated scanning pulses. Said evaluation step might be carried out at a later time, in particular off-line. It is clear to the skilled artisan, that the numbering of the steps should not be read as instruction for a sequential execution of the steps, but as a listing to improve the readability.

In some embodiments, the scanning instrument is configured to be mounted rotatably on a base unit. The base unit is configured to provide bearing rotation for the transmission directions of the transmitted first and second scanning pulses. In some alternative embodiments the base unit is configured to provide an oscillating motion for the bearing angle. The base unit might be a tripod stand. The base unit might comprise a compass and a spirit level or equivalent alignment aids. The rotation movement is preferably realized by a motorized axis. Manual rotation about the bearing rotation axis may also be possible under certain circumstances. Bearing in the sense of the present invention is a relative, instrument-intern horizontal angle to an arbitrary direction. In some embodiments the instrument is calibrated to a given direction, e.g. the true north, and bearing might also be an absolute horizontal angle relative to the given direction.

In some embodiments, the transmission unit comprises a rotatable mirror. The rotatable mirror provides a tilting rotation the transmission directions of the transmitted first and second scanning pulses. In some alternative embodiments, the mirror is configured to provide an oscillating motion for the tilting angle. The mirror might be parabolic. The scanning instrument might be configured to carry out a scanning process by rotating the transmission directions of the transmitted first and second scanning pulses. The axis of the tilting rotation might be calibrated to the true horizon and the tilting angle might be a calibrated elevation or inclination angle.

In some embodiments, rotating the transmission directions of the transmitted first and second scanning pulses carried out continuously, with a constant bearing rotation speed and a constant tilting rotation speed. In some embodiments, the bearing rotation speed is orders of magnitude lower than the tilting rotation speed. The bearing and tilting rotation speeds might be chosen to provide an isotropic scanning pattern, e.g. for a point density of 10 points/degree and a tilting rotation of 5400 rpm a respective bearing rotation is 1.5 rpm.

In some embodiments, a profiling instrument is configured to be mounted on a movable carrier, in particular a car, an unmanned vehicle, a rail vehicle, or a man-portable carrier, in order to guide the profiling instrument along a path. Alternatively, the profiling instrument is configured to be mounted rotatably on a support unit, wherein the support unit is mounted on the mobile carrier. The transmission unit might comprise a rotatable mirror to provide a tilting rotation for the transmission directions of the transmitted first and second scanning pulses. Tilting rotation in case of a profiling instrument might be a rotation in a plane which is not perpendicular to the horizon. In some alternative embodiments the mirror is configured to provide an oscillating motion for the tilting angle. The transmission unit might comprise a fast-rotating mirror configured to provide tilting rotation speeds of 5000 rpm or more.

The profiling instrument is configured to carry out a scanning process by rotating the transmission directions of the transmitted first and second scanning pulses with a constant rotation speed and steering the movable carrier along a path, wherein the pose of the mobile carrier is measured or derived. Alternatively, the profiling instrument is configured to carry out a scanning process during the movement of the mobile carrier, wherein the mobile carrier is steered independently of the profiler. The pose of the mobile carrier shall also be provided, in particular to the profiling instrument, and the pose of mobile carrier might be merged with data from the profiler.

In some embodiments, an energy and/or a width of the individual pulses in the second pulse train exceeds an energy and/or a width of the individual pulses in the first pulse train. In some specific embodiments, the first pulse train is a periodic pulse train, and the second pulse train is a periodic pulse train. These embodiments are especially advantageous as the first and the second scanning pulses are distinguishable by the pulse energy and/or pulse width. Thus, the assignment of the acquisition times to the respective transmission times might be further based on the pulse energy and/or width information. This aspect of the invention can, however, be applied when the first and the second scanning pulses are indistinguishable as isolated pulses.

In some embodiments, the light pulse source comprises a modulation unit configured to generate scanning pulse shift signal, e.g. a jitter signal. At least one of the first and the second pulse trains might be non-periodic, and the respective transmission events are shifted by the generated pulse shift signal. In case of a single pulse train such a jittering is a well-known technique to provide further verification means on the MTA disambiguation. While the present invention can be utilized without any further aiding feature such as pulse jitter, nevertheless it might be beneficial to combine the features of further disambiguation means.

Both the first and second pulse trains might be jittered. Thus, a higher variation of time intervals between the first scanning pulses of the first pulse train and the second scanning pulses of the second pulse train might be achieved. In these embodiments such simple, and low computation demand pulse jittering might contribute to an efficient MTA disambiguation.

In some embodiments, the first pulse train comprises laser pulses with a first laser wavelength, and the second pulse train comprises laser pulses with a second laser wavelength. The second laser wavelength is different from the first wavelength. Due to the different wavelengths the interaction of the first and the second scanning pulses and possible misidentification events are minimized. Due to the unambiguous distinction of the first and the second scanning pulses, an overlap between the first and the second scanning pulses might have no adverse effects.

In some embodiments, at least one of the first scanning pulses of the first pulse train and the second scanning pulses of the second pulse train comprise a plurality of individual pulses. A sequence of individual pulses for the first scanning pulses of the first pulse train and second scanning pulses of the second pulse train might be non-equal. The first scanning pulses might comprise a plurality of individual pulses e.g. to increase the dynamic range of the instrument, while the second scanning pulses might comprise a single individual pulse. The first scanning pulses might comprise a plurality of individual pulses to identify the acquisition events with unambiguity problems. In some embodiments, the first scanning pulses comprise a plurality of individual pulses while second laser wavelength differs from the first wavelength.

In some embodiments, the second repetition rate is less or equal to a half of the first repetition rate, in particular a unit fraction of the first repetition rate. These embodiments are especially beneficial in combination with periodic first and second pulse trains, since the time interval between the second scanning pulses of the second pulse train and the preceding and/or subsequent first scanning pulses of the first pulse train is always the same, which aids in the identification of the acquired second scanning pulses of the second pulse train.

In some embodiments, the second scanning pulses of the second pulse train provide anchor points for the first scanning pulses of the first pulse train. Anchor points for the present invention means that a second ambiguity distance defined by the second repetition rate is more than the envisaged measurement range. In other words, the distance of the anchor points to the scanning instrument can be determined without ambiguity. For anchor points the MTA disambiguation comprises (1) identifying acquired second scanning pulses of the second pulse train reflected from anchor points in the environment, in particular by identifying double-pulses, (2) determining the distance of the anchor points to the scanning or profiling instrument based on time of flights of the identified second scanning pulses of the second pulse train, (3) providing an ambiguity zone assessment for the first scanning pulses of the first pulse train based on the determined distance of the anchor point to the scanning or profiling instrument, (4) assigning the acquired first scanning pulses of the first pulse train reflected from object points in the environment to the first transmission events based on the ambiguity zone assessment. The second repetition rate might be a unit fraction of the first repetition rate when anchor points are utilized.

In some specific embodiments, the second repetition rate is a unit fraction of the first repetition rate and the second scanning pulses of the second pulse train are identified by a pattern recognition algorithm, in particular by identifying double ortriple pulses. In some even more specific embodiments, the time interval between the second scanning pulses of the second pulse train and the precedent first scanning pulses of the first pulse train is less than half of the time interval between two subsequent first scanning pulses of the first pulse train. These embodiments are especially beneficial for identifying the second scanning pulses, i.e. the anchor points. As a further advantage an identified double pulse also means that the precedent first scanning pulse is also reflected from the same ambiguity zone, whereas an identified triple pulse means that both the precedent and subsequent first scanning pulses are reflected from the same ambiguity zone.

In some specific embodiments, the anchor points are distinguishable from the first scanning pulses by different wavelengths and/or different pulse energies and/or different pulse widths. The anchor points in these embodiments are further identified by the distinguishing characteristic.

A second aspect of the invention also relates to a MTA disambiguation method for a terrestrial scanning instrument. The method comprises (1) continuously transmitting a first pulse train comprising first scanning pulses at a first repetition rate, wherein a first ambiguity distance defined by the first repetition rate is less than an envisaged measurement range, (2) continuously transmitting a second pulse train comprising second scanning pulses at a second repetition rate, wherein the second repetition rate is a proper fraction of the first repetition rate and each second scanning pulse of the second pulse train is separated by finite time intervals from each first scanning pulse of the first pulse train, (3) assigning to each first and second transmission event respective transmission directions and times, (4) acquiring first scanning pulses of the first pulse train and second scanning pulses of the second pulse train reflected from object points in the environment, (5) assigning for each acquisition event an acquisition time, and (6) assigning the acquisition events to the respective first and second transmission events, based on a MTA disambiguation utilizing the first and second repetition rates of the first and second pulse trains.

In some embodiments of the method, the second scanning pulses of the second pulse train are distinguishable from the first scanning pulses of the first pulse train, in particular by different laser wavelength and/or, by pulse energy and/or, pulse width, and/or pulse amplitude, and/or pulse shape, and/or pulse pattern. The method further comprises (1) dividing acquisition events into first acquisition events and second acquisition events, wherein first acquisition events relate to acquiring first scanning pulses of the first pulse train and second acquisition events relate to acquiring second scanning pulses of the second pulse train, (2) assigning for each first acquisition event a first acquisition time and for each second acquisition event a second acquisition time (3) assigning the first acquisition events to the respective first transmission events and the second acquisition events to the respective second transmission events based on a MTA disambiguation, wherein the MTA disambiguation comprises the recognition of the finite time intervals between the first and second transmission events in the time intervals of the first and second acquisition events.

In some embodiments of the method, a second ambiguity distance defined by the second repetition rate is more than the envisaged measurement range. The MTA disambiguation comprises (1) identifying an acquired second scanning pulse of the second pulse train, (2) determining a distance of an anchor point to the scanning or profiling instrument based on the time of flight of the identified second scanning pulse of the second pulse train, (3) providing an ambiguity zone assessment for the first scanning pulses of the first pulse train based on the determined anchor point to the scanning or profiling instrument distance.

In some embodiments, the second repetition rate is a unit fraction of the first repetition rate. An envisaged time interval between the second transmission events from the preceding first transmission events is less than one half, in particular one quarter, of the time interval between two subsequent first transmission events, wherein the envisaged time interval is a constant time interval or a modulated time interval comprising a jitter term, between two transmission events. The method further comprises the steps of (i) identifying the second scanning pulses by a pattern recognition algorithm, in particular by identifying the envisaged time interval between two acquisition events, (ii) assigning the preceding first scanning pulses of the first pulse train to the ambiguity zone defined by the distance of the anchor point to the scanning instrument. The succeeding first scanning pulses of the first pulse train might also be assigned to ambiguity zone defined by the distance of the anchor point to the scanning instrument.

In some embodiments, a tolerance range is defined based on the time interval of a second transmission event and a subsequent first transmission event. The MTA disambiguation further comprises the step of assigning the subsequent first scanning pulses of the first pulse train to the ambiguity zone defined by the distance of the anchor point to the scanning instrument, when a first scanning pulse is acquired with a time interval from the acquisition of the second scanning pulse falling into the tolerance range.

In some embodiments of the method, all first scanning pulses of the first pulse train acquired between the acquisition of two subsequent second scanning pulses of the second pulse train defining the same ambiguity zone assigned to the said ambiguity zone.

In some embodiments, the method further comprises the steps of (1) defining for a given first transmission event a respective proximity angular range, wherein the proximity angular range (a) is compact, in particular conical or pyramidal, (b) comprises a respective object point relating to the given first transmission event, and (c) comprises a plurality of anchor points; (2) providing a distance estimate for each of the one or more first transmission events on the basis of the distances of the anchor points to the scanning instrument within the proximity angular range, in particular wherein a range of the respective distances is smaller than a first ambiguity distance; and (3) providing an assessment on a plausibility of the MTA assignment on the basis of the ambiguity zone assessment and the distance estimate of the respective first scanning pulse, in particular wherein the distance estimate is out of the assessed ambiguity zone.

In some specific embodiments, the proximity angular range comprises anchor points with different azimuthal angles. In other words, it comprises anchor points from different scan lines. The proximity angular range might be a circular cone or a quadratic pyramid with the scanning instrument at the apex and the object point relating to the given first transmission event might be on the main axis of the circular cone or quadratic pyramid. Such embodiments are especially beneficial for identifying outliers or other artifacts in a post processing. Alternative geometries, in particular wherein the object point relating to the given first transmission event is located at the edge of the proximity angular range, might be applied for displaying the scanning data on the flight.

In some specific embodiments, the proximity angular range is substantially linear, i.e. it comprises anchor points with similar azimuthal angles.

In some specific embodiments, the range estimate is provided further on the basis of the coordinates of the assigned object points within the proximity angular range
In some specific embodiments, the MTA disambiguation is performed on the basis of the distance estimate, in particular wherein the variance of the distance estimate as a function of the shape and/or extent of the proximity angular range is at least an order of magnitude lower than the first ambiguity distance; and/or the range of the distances of the anchor points is an order of magnitude lower than the first ambiguity distance.

In some embodiments, the method further comprises deriving coordinates of the object points based on the assignment of the acquisition events to the respective first and second transmission events. The MTA disambiguation, in particular the ambiguity zone assessment, further based on the density of point cloud object points in the point cloud. Alternatively, the assignment might minimize number of outliers, in particular wherein the outliers are anchor points. Such assignment is based on the correct assignment of the anchor points, since the second ambiguity distance exceeds the distance of the anchor points from the scanning instrument. The assignment is based on the fact that a mis-assignment causes at least for two object points at least a first ambiguity distance error.

A third aspect of the invention relates to a computer program product for a scanning system which, when executed by a computer, in particular an evaluation unit of a scanning instrument, causes the automatic execution of the computation steps of a selected embodiment of the MTA disambiguation method according to the second aspect of the invention.

A fourth aspect of the invention relates to an alternative embodiment of terrestrial MTA scanning instrument. The scanning instrument is configured to provide a point cloud representing an environment. The scanning instrument comprises a light pulse source, a transmission unit, an acquisition unit, and an evaluation unit.

The light pulse source is configured to generate pulse trains comprising scanning pulses with corresponding repetition rates. The light pulse source is configured to generate at least two types of pulse trains with two different repetition rates. Unless otherwise specified any specific features of the light pulse source of the according to the first aspect might be applicable to the light pulse source according to the fourth aspect, in particular the features of the first and second pulse train might be applicable.

The transmission unit is configured to transmit the scanning pulses of a pulse train along respective transmission directions. The transmission unit comprise a beam deflection element for varying the transmission direction at least by a rotation about a rotation axis. The beam deflection element might be a rotating mirror, in particular a fast-rotating mirror with at least 5000 rpm rotation speed, the rotation axis might be a horizontal tilting axis. The transmission unit might provide further rotational degrees of freedom, e.g. about a vertical bearing axis. Alternatively further components of the scanning instrument, in particular a support and/or base unit, might provide further rotational degrees of freedom. The scanning instrument might be mounted on a mobile carrier providing translational degrees of freedom.

The transmission unit comprises angle sensors for providing data regarding the respective transmission directions of the transmitted scanning pulses. The transmission unit comprises elements for providing respective transmission times of the transmitted scanning pulses. Unless otherwise specified any specific features of the transmission unit of the first aspect might be applicable to the transmission unit of the fourth aspect.

The acquisition unit is configured to acquire the scanning pulses of the pulse train reflected from object points in the environment, wherein for each acquisition event an acquisition time being assigned. Unless otherwise specified any specific features of the acquisition unit of the first aspect might be applicable to the acquisition unit of the fourth aspect.

The evaluation unit is configured to (1) assign to each transmission event the respective transmission directions and times, (2) assign the acquisition events to the respective transmission events based on an MTA disambiguation, (3) derive coordinates of the object points based on the assignment of the acquisition events to the respective transmission events, (4) provide the point cloud representing the environment based on the object points. Unless otherwise specified any specific features of the evaluation unit of the first aspect might be applicable to the evaluation unit of the fourth aspect.

The scanning instrument is configured to carry out a scanning process comprising (1) in a first circle (a) rotating the transmission direction with a first rotation speed, and (b) generating and transmitting scanning pulses of a first pulse train with a first repetition rate, wherein a first ambiguity distance defined by the first repetition rate is less than an envisaged measurement range, (2) in a second circle, (a) rotating the transmission direction with a second rotation speed, (b) generating and transmitting scanning pulses of a second pulse train with a second repetition rate, wherein the second repetition rate is different from the first repetition rate. A rotation angle circle for the invention might be a full 2π rotation, e.g. starting from a nadir or a north direction.

The MTA disambiguation utilizes the first and second repetition rates. The coordinates of the object points are derived based on the assignment of the acquisition events to the respective transmission events. The point cloud representing the environment is provided based on the determined coordinates of the object points.

In some embodiments, the scanning instrument is configured to be mounted rotatably on a base unit. The base unit configured to provide bearing rotation about a bearing rotation axis for the transmission directions. The beam deflection element is embodied as a rotatable mirror providing a tilting rotation about a tilting rotation axis for the transmission directions. The scanning instrument configured to carry out a scanning process by, (a) in the first circle rotating the transmission direction with a first bearing rotation speed and a first tilting rotation speed, and (b) in the second circle rotating the transmission directions with a second bearing rotation speed and a second tilting rotation speed. In some specific embodiments, each of the tilting rotation speeds are least ten times higher than the respective bearing rotation speeds.

In some embodiments, (a) the second bearing rotation speed is equal to the first bearing rotation speed, (b) the second tilting rotation speed is equal to the first tilting rotation speed, and (c) the second circle is immediately subsequent to the first circle. In such a scanning strategy both the density of the object points and the ambiguity distance defined by the repetition rates at the first and second circles are different, thus the distance jumps might have different effects in the two circles. For a dense point cloud, the two circles are near to each other, thus the object points should be reasonably close to each other in the first and second circle.

In some embodiments, (a) a ratio of the first tilting rotation speed to the second tilting rotation speed is equal to a ratio of the second repetition rate to the first repetition rate, and (b) a ratio of the first bearing rotation speed to the second bearing rotation speed equal to the ratio of the second repetition rate to the first repetition rate. These embodiments are especially beneficial as the density of the point cloud is constant and the object points of both the first and second circle might be utilized to derive the point cloud representing the environment.

In some specific embodiments, a bearing angle difference between the first circle and the second circle is 180°. Such a scanning strategy could be foreseen as a two-face scanning strategy, wherein the first circle and the second circle represent essentially the same part of the setting. While this scanning strategy takes longer to execute it delivers a point cloud with homogeneous point density showing no density fluctuations.

In some specific embodiments, a bearing angle difference between the first circle and the second circle is less than the bearing angle difference of any two first circles. Such scanning can be realized especially advantageously by increasing the bearing rotation speed by approximately a factor of 2. The first circles are acquired in the bearing rotation range between 0-180°, while the second circles are acquired in the bearing rotation range 180°-360° such the second circles are respectively in intermediate positions to the first circles. Such setting is especially advantageous for preview scans.

In some embodiments, a direction of the tilting rotation in the first circle is opposite to a direction of the tilting rotation in the second circle. The MTA disambiguation further comprises an ambiguity zone change test on the basis the different direction of the tilting rotation in the first and the second circle. These embodiments are especially advantageous in identifying and correctly characterizing ambiguity zone changes. An ambiguity zone change might be a near-to-far or a far-to-near. The first is characterized by a still period, i.e. no reflected pulses are acquired for an interval exceeding the interval between the transmissions of two subsequent scanning pulses. The second is characterized by pulse overtaking. By performing the scanning along both direction of the tilting rotation ambiguity zone changes. It is experienced first as near-to-far and second as far-to-near, or vice versa. Due to the observed still period an ambiguity zone change might be detected, while the length of the still period provides information on the extent of the ambiguity zone change.

In some embodiments, a second circle ambiguity distance defined by the second repetition rate is more than the envisaged measurement range. I.e. the second circle provides anchor points for the first circle measurement. Combining these embodiments with the two face measurements are especially beneficial.

In some embodiments, the scanning pulses comprise a plurality of individual pulses. The application of complex scanning pulses might be beneficial in an environment with large reflectivity variations, and the individual pulses might be of individual pulses with an amplitude variation exceeding a factor of 2. The application of complex scanning pulses might also be beneficial as they might provide further aid in the identification of the ambiguity zones.

In some embodiments, the light pulse source comprises a modulation unit. The modulation unit is configured to generate scanning pulse shift signal, and at least one of the first or second pulse trains is non-periodic and the respective transmission events are shifted by the generated pulse shift signal.

A fifth aspect of the invention relates to a method of MTA disambiguation for a terrestrial scanning instrument. The method comprises the steps of (1) in a first circle (a) rotating a transmission direction with a first rotation speed, (b) generating and transmitting scanning pulses of a first pulse train with a first repetition rate, wherein a first ambiguity distance defined by the first repetition rate is less than an envisaged measurement range, (2) in a second circle, (a) rotating a transmission direction with a second rotation speed, (b) generating and transmitting scanning pulses of a second pulse train with a second repetition rate, (3) assigning to each transmission event respective transmission directions and times, (4) acquiring return pulses, and (5) assigning acquisition events to the respective transmission events based on an MTA disambiguation, wherein the MTA disambiguation utilizes the first and second respective repetition rates. Unless otherwise specified any specific features of the second aspect of the method might be applicable to the present aspect.

In some embodiments, the method further comprises a first measurement phase and a second measurement phase. The first measurement phase comprises a generation of first circles by (a) rotating a bearing angle of the transmission direction in a first bearing angle range with a first bearing rotation speed, and (b) rotating a tilting angle of the transmission direction with a first tilting rotation speed. The second measurement phase comprising a generation in the second circles by (a) rotating the bearing angle of the transmission direction in a second bearing angle range with a second bearing rotation speed, and (b) rotating the tilting angle of the transmission direction with a second tilting rotation speed. The second bearing and tilting rotation speeds are different from the first bearing and tilting rotation speeds such that (1) a ratio of the first tilting rotation speed to the second tilting rotation speed is equal to a ratio of the second repetition rate to the first repetition rate, and (2) a ratio of the first bearing rotation speed to the second bearing rotation speed is equal to the ratio of the second repetition rate to the first repetition rate.

In some embodiments, the first bearing angle range covers a range of less than 180° extent, and the second bearing angle range covers the same range as the first bearing angle range. One especially advantageous realization of such a window scan is to perform the first measurement phase with a clockwise bearing rotation and the second phase with a counterclockwise bearing rotation or vice versa. The direction of the tilting rotation might also be reversed. A scan grid might be selected to be essentially the same in the first and second measurement phase or might be selected to be complementary. The latter is advantageous in that an improved point cloud density or alternatively reduced scan time might be achieved.

In some embodiments, the first bearing angle range comprises a range of at least 170° extent, in particular 180°, and the second bearing angle range comprises a range of at least 170° extent not covered by the first bearing angle range. Said scanning strategy comprises two corresponding full dome scans, wherein the first full dome scan is carried out with a first parameter set (bearing, tilting rotation speed and repetition rate), while the second one with a second set. It is clear for the skilled artisan that due to the inertia of the rotating components a finite transition zone might exist between these two scans. The transition zone could be conveniently determined by the surveyors themselves (e.g.: contains no objects, contains only near-field objects). The scanning might be realized such that for each first circle a corresponding second circle is definable, wherein a bearing angle difference between the first and the corresponding second circle is 180°. This means that object points belonging to first and second circle are on essentially the same location and only the ambiguity distance differs. This type of scanning is advantageous by allowing direct comparison between the object points. Alternatively, the scanning might be realized such that for each first circle a neighboring second circle is definable, wherein a bearing angle difference between the first circle and the neighboring second circle falling in the range of 180° and 180° plus the bearing angle difference between two neighboring first circles, in particular a half of that. The advantage of this scanning is that the second circle object points complement the first circle object points, thus the lateral resolution and/or the scanning time might be optimized.

In some embodiments of the method, a direction of the tilting rotation in the first measurement phase is opposite to a direction of the tilting rotation in the second measurement phase, the MTA disambiguation further comprises an ambiguity zone change test on the basis of the different direction of the tilting rotation in the first and the second measurement phases.

In some embodiments of the method, a convex unambiguous area is defined such that for each second circle object points, i.e. the anchor points, within the convex unambiguous area the distance of second circle object points to the scanning instrument falling within the same ambiguity zone. Scanning pulses in the first circle reflected from an angular range corresponding to the convex unambiguous area are assigned to the ambiguity zone defined by the distance of second circle object points within the convex unambiguity zone to the scanning instrument. These embodiments are favorably combinable with windows scans or with two face scans.

A sixth aspect of the invention relates to a computer program product for a scanning system which, when executed by a computer, in particular an evaluation unit of a scanning instrument, causes the automatic execution of the computation steps of a selected embodiment of the MTA disambiguation method.

### BRIEF DESCRIPTION OF THE DRAWINGS

By way of example only, specific embodiments of the invention will be described more fully hereinafter with reference to the accompanying figures, wherein:
Figure 1a shows a schematic embodiment of a scanning instrument.
Figure 1b shows a schematic embodiment of a scanning instrument wherein the light pulse source comprises two laser diodes.
Figure 1c shows a profiler with tilting axis rotation mounted on a mobile carrier.
Figure 1d shows the schematics of a profiler with bearing axis rotation mounted on a mobile carrier.
Figure 2a shows an environment with multiple ambiguity zones and the prior art scanning method.
Figure 2b shows a timeline of transmission and acquisition events with a hypothetical correct assignment.
Figure 2c shows an assignment of transmission and acquisition events according to the prior art based on an acquisition sequence.
Figure 2d shows estimated positions of object points based on a sequential assignment according to the prior art.
Figure 2e shows an assignment wherein ambiguity zones are falsely estimated, e.g. due to a falsely detected acquisition event.
Figure 2f shows estimated positions of object points based on the assignment of Figure 2e.
Figure 3 shows a first and second pulse train according to an aspect of invention, wherein the second scanning pulses provide anchor points.
Figure 4a shows a scanning procedure according to an embodiment of the invention based on anchor points.
Figure 4b shows transmission and acquisition events according to an embodiment of the invention based on anchor points.
Figure 4c shows anchor points of a point cloud.
Figure 4d shows an assignment of first scanning pulses, wherein the anchor points indicate no ambiguity zone change.
Figure 4e shows a point cloud extended with the events assigned in Figure 4d.
Figure 4f shows an assignment of the first scanning pulses subsequent to anchor points based on a tolerance range of acquisition events.
Figure 5a shows distinguishable first and second pulse trains, wherein the ratio of the first and second repetition rates is 6:5.
Figure 5b shows undistinguishable first and second pulse trains, wherein the ratio of the first and second repetition rates is 6:5.
Figure 6a shows a scanning procedure according to the present invention with no ambiguity zone change.
Figure 6b shows a timeline of first and second transmission and acquisition events with a correct assignment based on a sequence of events.
Figure 6c shows an assignment wherein ambiguity zones are falsely estimated, e.g. due to a falsely detected acquisition event.
Figure 6d shows estimated positions of object points based on the assignment of Figure 6c.
Figure 7a shows an embodiment of a two-circle MTA-disambiguation with a repetition rate change between two subsequent circles.
Figure 7b shows an embodiment of a two-circle MTA-disambiguation with two-face scanning.
Figure 8a shows a two-face scanning strategy with double scan.
Figure 8b shows a scanning strategy with interleaved scans.
Figure 8c shows a scanning strategy for windowed scans.
Figure 9a depicts a scan with different directions of rotation for the tilting angle.
Figure 9b depicts the effect of a far-to-near ambiguity zone change.
Figure 9c depicts the effect of a near-to-far ambiguity zone change.

### SPECIFIC EMBODIMENTS OF THE INVENTION

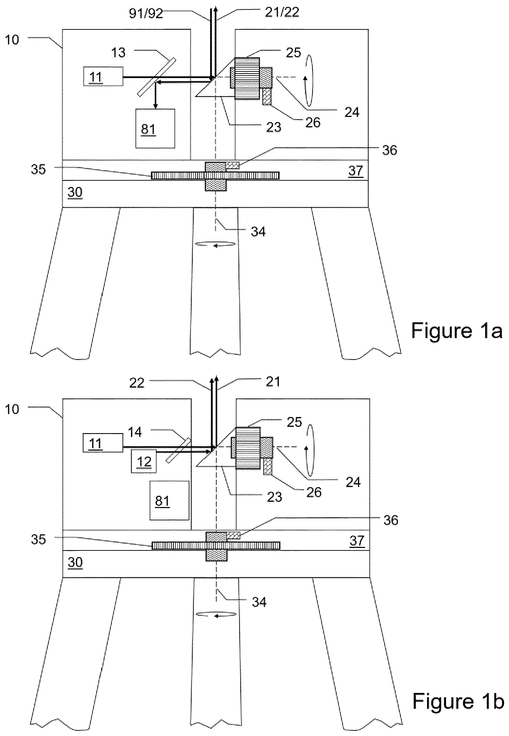

Figure 1a shows a schematic embodiment of a scanning instrument **10.** The light pulse source comprises a laser source **11,** configured to emit first and second pulse trains. The first scanning pulses of the first pulse train and second scanning pulses of the second pulse train are emitted along the essentially same optical path. In the depicted embodiment a transmission unit comprises a rotating mirror **23,** which can be rotated about a tilting axis **24** by a motor **25.** The scanning instrument **10** is mounted by a support unit **37** to a base **30** such that it is rotatable about a bearing axis **34** by a motor **35.** The scanning instrument comprises a bearing angle sensor **36** configured to provide bearing angle reading. Alternatively, the base **30** might comprise the bearing angle sensor **36.** The scanning instrument comprises a tilting angle sensor **26** configured to provide tilting angle reading. The transmission directions of the respective first **21** and second scanning pulses **22** are determined based on the respective sensor readings. Reflected first and second scanning pulses coming from directions **91/92** of object points are first redirected by the rotating mirror **23** towards the internal volume of the scanning instrument **10.** Then the semitransparent mirror **13** redirects the return pulses towards the acquisition unit **81.** Instead of a semitransparent mirror **13** a mirror with a specific transmission zone and a specific reflection zone might also be utilized, e.g. a mirror with a hole as transmission zone. Alternative embodiments, in particular wherein the acquisition unit **81** is located or partly located at the outer surface of the scanning instrument **10,** might also be possible within the meaning of the present invention.

Figure 1b shows a schematic embodiment of the scanning instrument **10** wherein the light pulse source comprises separate first **11** and second laser sources **12.** The first **11** and second laser sources **12** might have a common casing defining a common optical path. The depicted rotating mirror **23** is a common component for both the first **11** and second laser sources **12.** The applicability of the invention is not limited to a specific design of the light pulse source. The in Figure 1b depicted embodiment is especially advantageous as it allows the utilization of two separate laser sources with different laser wavelength. The acquisition unit **81** and the beam combiner/beam splitter **14** in Figure 1b, is analogous to the respective elements shown in Figure 1a. The application of separate acquisition units or further separate component for the two laser sources **11,12** is also possible.

Scanning instruments **10** comprising rotating mirrors **23** and rotatably mounted on a base **30** by a support unit **37** are well-known and widely applied arrangements. The present invention is however not limited to such embodiments. On the contrary, the invention can be applied with any setup providing the required degrees of freedom of the transmission directions **21,22.** The present invention is neither limited to the use of a common beam deflecting element for transmitting the first and second scanning pulses. The present invention is not limited to first and second laser beam essentially consisting of a single ray transmitted along a single transmission direction **21,22.** On the contrary, the invention might also be applied to multibeam scanning instruments generating a plurality of first and/or second scanning pulses simultaneously and transmitting them along a plurality of transmission directions **21,22.**

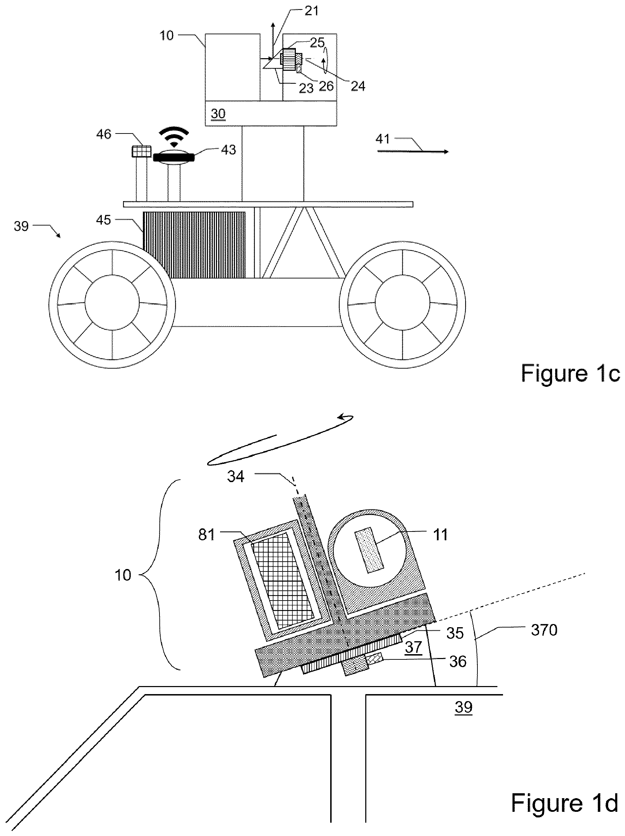

Figure 1c shows a schematic profiling instrument **10** mounted on a mobile carrier **39** depicted as a rail trolley. Such profiling instruments are often used to acquire point cloud data along a linearly navigable track, e.g. a tunnel. The depicted rail trolley **39** comprises an engine **45** to propel the profiling instrument along a path **41,** a retroreflector **46** to provide a pose of the trolley **39** in combination with a tracking instrument (not shown), and a communication unit **43** e.g. for remotely controlling the trolley **39** and/or the profiling instrument **10.** It is clear for the skilled person that the invention is applicable with alternative embodiments. E.g. the communication unit **43** might be comprised by the profiler **10** and/or a further computing unit might provide the guidance along the path **41,** instead of a passive retroreflector. The pose of the trolley **39** and/or the profiling instrument **10** might be provided by an active pose determination unit, in particular a GNSS and/or wireless navigation system and/or an inertial navigation system.

The depicted profiler **10** is substantially similar to the scanning instruments of Figure 1a and 1b, however the transmission direction **21** of the beam can only be rotated about a tilting axis **24** by a motorized **25** rotating mirror **23.** The profiling instrument comprises a tilting angle sensor **26** configured to provide tilting angle reading. The transmission directions of the first **21** and second scanning pulses are determined based on the respective the sensor readings. The tilting axis **24** in the depicted embodiment is horizontal, however the invention is applicable with any orientation of the tilting axis **24.** The base **30** might provide pose adjustment options.

Figure 1d shows a profiler **10** mounted on a mobile carrier **39,** in particular a car, by a support unit **37.** The support unit **37** is rotatable about a bearing axis **34** by a motor **35** and comprise an angle sensor **36** configured to provide bearing angle reading. The profiler **10** is mounted such that its bearing axis **34** has a given angle **370** to the horizon. Said angle **370** might be adjustable. The in Figure 1d depicted embodiment comprise an extended first laser source **11.** In some embodiments of the profiler **10** the transmission unit (not shown here) of the first laser source **11** might be configured to provide a multibeam scanning. The depicted embodiment comprises an area detector in the acquisition unit **81,** such detectors might be angle resolved.

The features of the here depicted embodiments are combinable with each other or with similar or alternative embodiments of the state of the art.

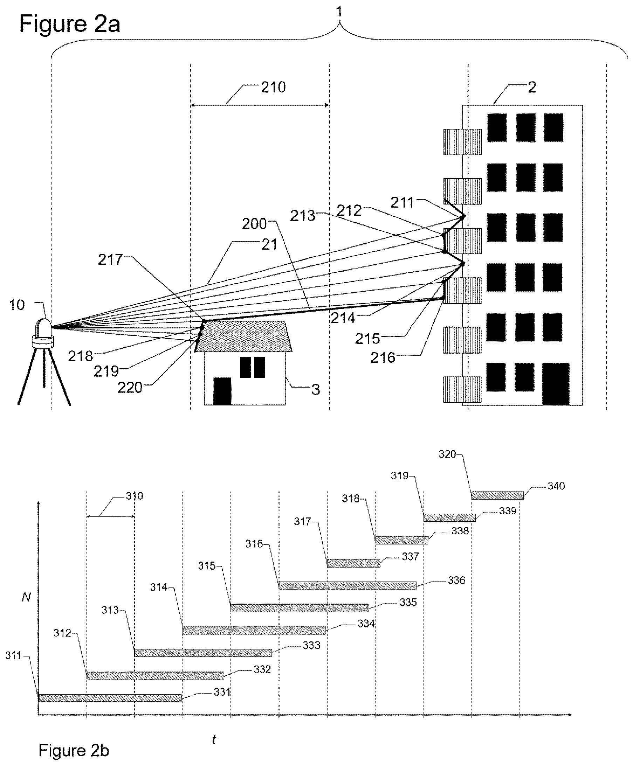

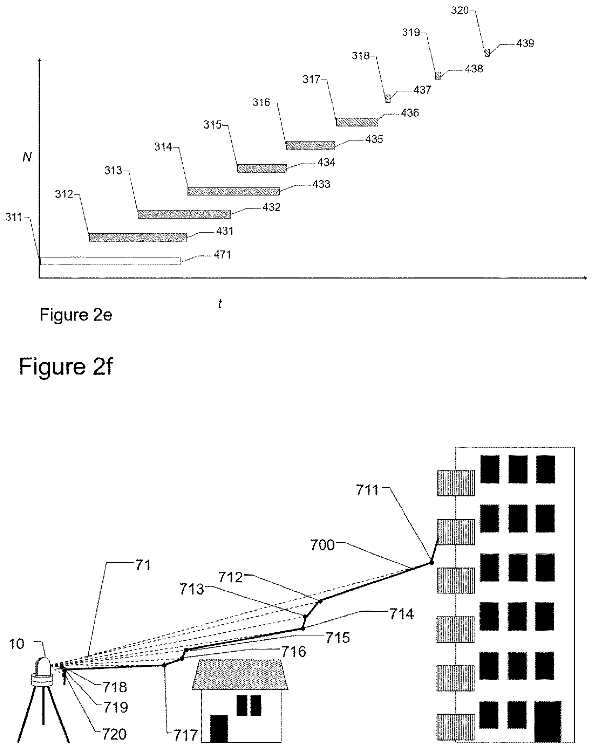

Figure 2a shows an urban environment **1** with a plurality of objects **2,3.** The scanning instrument **10** scans the environment by transmitting first scanning pulses of the first pulse train, e.g. laser pulses, along the transmission directions of the first scanning pulses **21.** The transmission direction of the first scanning pulses **21** advances along a scan pattern. The scan pattern to derive the object surface **200** in the depicted embodiment is such that first scanning pulses of the first pulse train are transmitted towards object point **211-220** subsequent to each other. The coordinates of object point **211-220** are derived from the transmission direction **21** and from the distance to the scanner **10.** The distance to the scanner **10** is derived from the time of flight of the pulses, i.e. by assigning transmission and acquisition times to a given first scanning pulse of the first pulse train. The object points **211-220** are farther from the scanning instrument **10** than a first ambiguity distance **210** defined by the first repetition rate. The first ambiguity distance **210** might be the delta time of the first repetition rate times the speed of light. Some object points might be closer to the scanning instrument **10** than the first ambiguity distance **210.** It also goes without saying that the first ambiguity distance **210** defines spheres around the scanning instrument. The lines depicted e.g. in Figure 2a are simplifications due to illustrative purposes.

Due to the characteristics of the urban environment **1,** a distance jump takes place between object points **216** and **217.** The invention is in no way limited to be applied in urban environments. The invention might be applied in any environment with a measurement range larger than the first ambiguity distance **210.** Moreover, distance jumps might be present in non-urban environments e.g. in wooded or mountainous environments. Distance jump in the sense of the invention means that the distance difference of object points **216** and **217** exceeds the first ambiguity distance **210.** Such non-continuous ambiguity zone changes lead to a situation that the first scanning pulse of the first pulse train reflected from object point **217** will be acquired before the first scanning pulse of the first pulse train reflected from object point **216.**

Figure 2b shows time of flights for a sequence of scanning pulses reflected from object points, wherein *t* is the time and *N* is an arbitrary number representing the order of the pulses in the sequence. The transmission events **311-320** follow each other with a regular time interval **310** inversely proportional to the repetition rate of the scanning pulses. The time of flights till the acquisition events **331-340** are proportional to the distance of the object points from the scanning instrument. The time of flights depicted in Figure 2b are based on an idealized assumption that the scanning instrument can distinguish between the scanning pulses and correctly assign the acquisition events **331-340** to the transmission events **311-320.** Since the sequence of the acquisition events is **331-335,337,336,338-340** such assignment is unlikely without providing further information regarding the ambiguity zones to the evaluation unit.

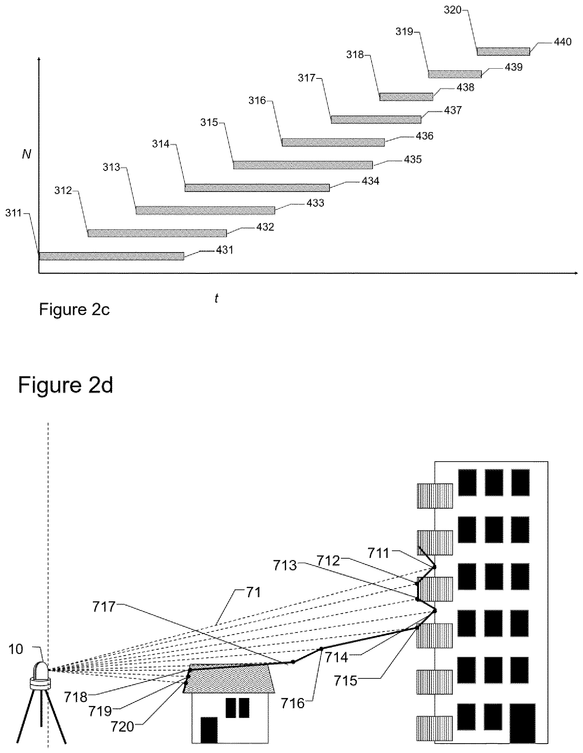

More likely is an assignment shown in Figure 2c, wherein the scanning pulse acquired first is assigned to the first transmitted scanning pulse, i.e. the transmission-acquisition events are assigned to a sequence **431-440,** etc. Such assignment leads to a situation where coordinates of object points are misinterpreted as shown in Figure 2d. The result looks like if scanning pulses emitted in transmission direction **71** would have been reflected from a set of misinterpreted object points **711-720.** The derived object surface **700** is wrong. Without further information, however, even proving the existence of a measurement error is difficult let alone correcting it.

The assignment of Figure 2c and 2d is at least correct for object points far away from the non-continuous ambiguity zone changes. Without further verification, however, not even that could be guaranteed. Figure 2e depicts a situation wherein a transmitted pulse **311** is assigned to an artifact **471,** e.g. an electronic glitch or reflected sunlight. The further transmitted pulses **312-320** are assigned to acquired pulses in the **431-439** sequence. A set of misinterpreted object points **711-720** and a derived object surface **700** is even worse than the one depicted in Figure 2d. However, as in the previous case, correctness of the data cannot be tested.

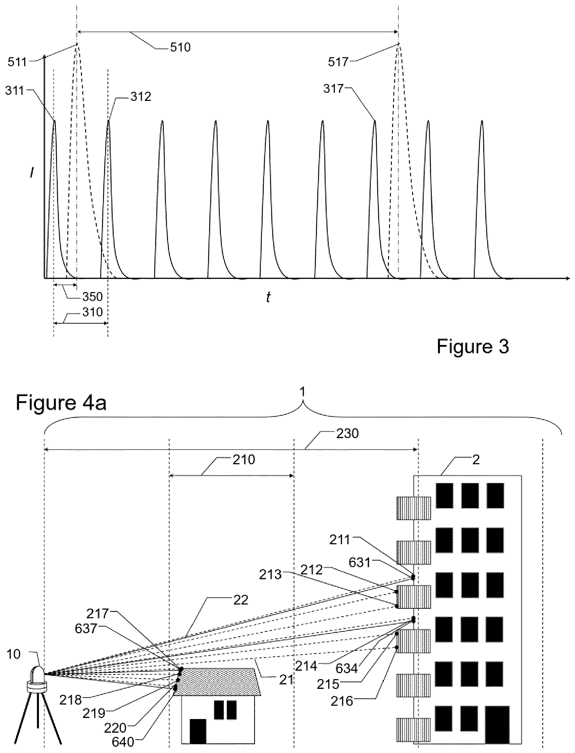

Figure 3 shows a sequence of first **311,312,317** and second scanning pulses **511,517** by depicting the light intensity (I) vs the time (t), wherein the second repetition rate is a unit fraction of the first repletion rate. Transmission events are defined as a peak of respective pulses **311,312,317,511,517.** Another choice, in particular a centroid of a pulse or a separate electronic trigger, might also be applied in the sense of the invention. While not recognizable on the pulse sequence alone, the choice of the second repetition rate might be motivated by the fact that the second ambiguity distance defined by the second repetition rates is larger than an envisaged measurement range. The depicted 1:6 ratio serves purely descriptive purposes; the invention might be applicable with any appropriate unit fraction as the ratio of the second and first repetition rates. Instead of repetition rates, time intervals between two first scanning pulses **310** and two second scanning pulses **510** are shown, which are inversely proportional to the respective repetition rates. The interval **350** between the second scanning pulses **511,517** and the preceding first scanning pulses **311,317** is lower than the interval **310** between two first scanning pulses. An echo of double pulses **311/511** or **317/517** can be recognized and unambiguously assigned to transmission events of second scanning pulses. Furthermore, the second scanning pulses **511,517** might be distinguishable from the first scanning pulses **311,312,317** by pulse characteristic, e.g., by amplitude, width, or laser wavelength and/or spectra. If the second ambiguity distance defined by the second repetition rate is larger than the envisaged measurement range the transmission and acquisition of the second scanning pulses **511,512** unambiguously defines the distance of respective object point from the scanning instrument, i.e. they act as anchor points. The preceding first scanning pulses **311,317** might be assigned to the ambiguity zone defined by the anchor points. The subsequent first scanning pulses **318** might also be assigned to the ambiguity zone defined by the by the anchor points. It is clear to the skilled person that instead of the light intensity another parameter, e.g. electric currents of the evaluation unit, might have been equally used.

Figure 4a-4f shows an exemplary assignment based on anchor points. Figure 4a shows an embodiment of a scanning process based on anchor points **631,634,637,640.** The first ambiguity distance **210** defined by the first repetition rate is less than the envisaged measurement range. The second ambiguity distance **230** defined by the second repetition rate is more than the envisaged measurement range, in particular the distance of the farthest object **2** to be surveyed in the environment **1.** This means that the distance of the anchor points **631,634,637,640** to the scanning instrument **10** can be determined unambiguously. The first scanning pulses of the first pulse train and the second scanning pulses of the second pulse train are transmitted from the scanning instrument **10** along the respective transmission directions of the first **21,** depicted as dashed lines, and second scanning pulses **22,** depicted as solid lines, and reflected from the respective object points **211-220** and anchor points **631,634,637,640.** The second scanning pulses of the second pulse train might have different pulse characteristics than the first scanning pulses of the first pulse train or might be recognized via pattern recognition. The in Figure 4a depicted embodiment e.g. allows such recognition as double pulse.

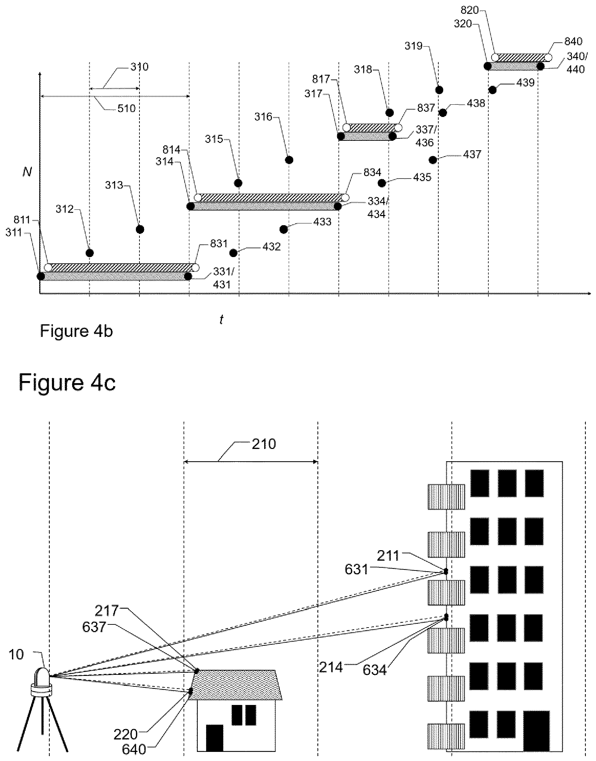

Figure 4b depicts a first step of the assignment of the transmission events **311-320** of the first scanning pulses to the acquisition events **431-440.** The interval between the transmissions of two first scanning pulses **310** is depicted to be one third of the interval between the transmissions of two second scanning pulses **510,** the latter is chosen such that the distance of the anchor points is unambiguously determinable. In other words, no further second scanning pulses are transmitted during the time of flight of a second scanning pulse. Thus, anchor point acquisition events **831,834,837,840** can be unambiguously assigned to the respective transmission events **811,814,817,820.** In the depicted embodiment the anchor points are identified based on pattern recognition. This also means that precedent first acquisition events **331,334,337,340** can also be unambiguously assigned to the respective first transmission events **311,314,337,340.** Especially interesting is the case of event **337/436,** wherein a pulse overtake could be identified.

Figure 4c depicts the anchor points **631,634,637,640,** and the respective object points **211,214,217,220** assigned unambiguously. In the depicted example subsequent anchor points **631,634** and **637,640** are characterized by a distance from the scanning instrument **10** which fall into the same ambiguity zone defined by the first ambiguity distance **210.** Since for a dense point cloud there is a plurality of anchor points per m² it is unlikely that the object points in between would fall into another ambiguity zone.

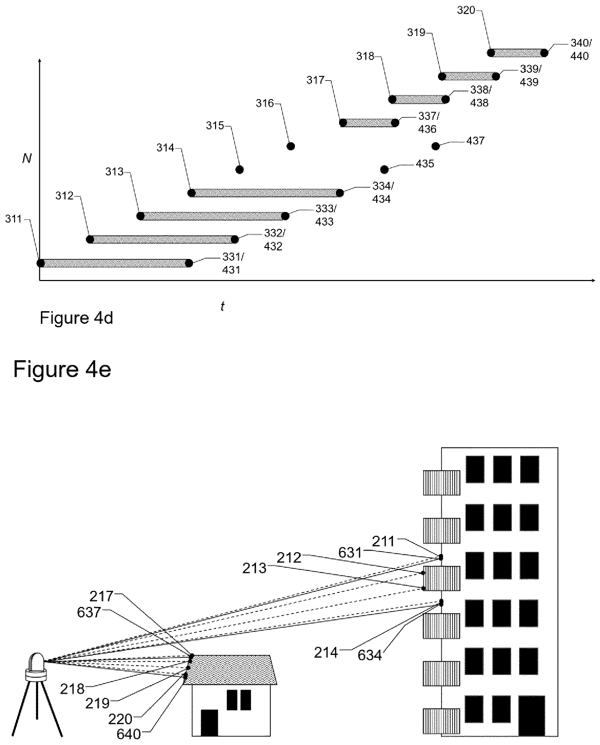

Figure 4d depicts a next step of the assignment wherein the first transmission events **312,313,318,319** are assigned to the respective acquisition events **332/432, 333/433,338/438** and **339/439.** Figure 4e represents a reconstructed point cloud for this stage. Not only the object points **211,214,217,220** preceding the anchor points **631,634,637,640,** but object points **212,213,218,219** are also correctly represented. Figures 4d and 4e illustrate a beneficial property of the claimed invention, as the mentioned object points are assigned based on a simple criterion, without excessive computation. Thus, the computational need is not a function of the total number of the ambiguity zones, but the actually observed ambiguity zone changes.

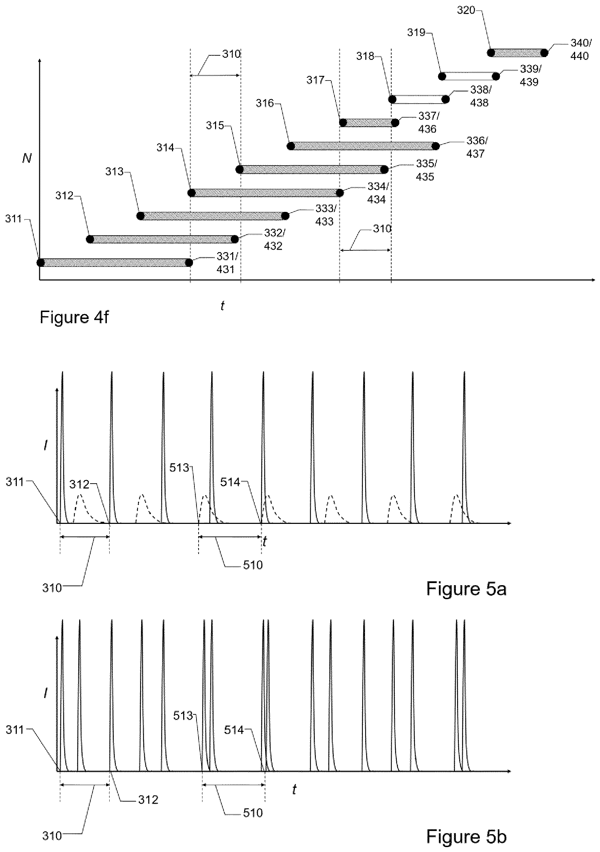

Figure 4f illustrates an assignment of the acquisition events near the observed ambiguity zone change **435,437.** In the depicted embodiment this is carried out based on a pattern recognition, namely that interval between acquisition events **334,435** corresponds reasonably to the interval time intervals **310** between two first scanning pulses. Thus, acquisition event **435** can be assigned to transmission event **315.** The depicted embodiment is an exemplary realization of the assignment near the ambiguity zone change, alternative embodiments are also within the sense of the present invention.

Figures 5a and 5b depict a first pulse train comprising first scanning pulses **311,312** at a first repetition rate and a second pulse train comprising second scanning pulses **513,514** at a second repetition rate depicted as the light intensity (I) as a function of the time (t). The first and second scanning pulses are distinguishable due to pulse characteristics in Figure 5a and undistinguishable in Figure 5b. For brevity and transparency reasons Figure 5a will be discussed in details, however the features are applicable to the case depicted in Figure 5b or any reasonable alternative embodiments.

In the depicted embodiment the interval between two first scanning pulses **310** has a 5:6 ratio to the respective interval between two second scanning pulses **510.** While this exact choice is purely arbitrary, proper fractions with close to unity are advantageous since in those embodiments each first scanning pulse of the first pulse train has one or two nearest second scanning pulses of the second pulse train, which are separated by a time interval less than the time interval **310** between two first scanning pulses of the first pulse train. The transmission events of the second scanning pulses **513,514** are separated by a finite time interval from the first scanning pulses **311,312.** Since the interval between two first scanning pulses **310** is always a proper fraction of the respective interval between two second scanning pulses **510** such time intervals are nonzero throughout the whole scanning process. For pulse trains which are not strictly periodic as depicted in Figure 5a, the jitter should be selected appropriately.

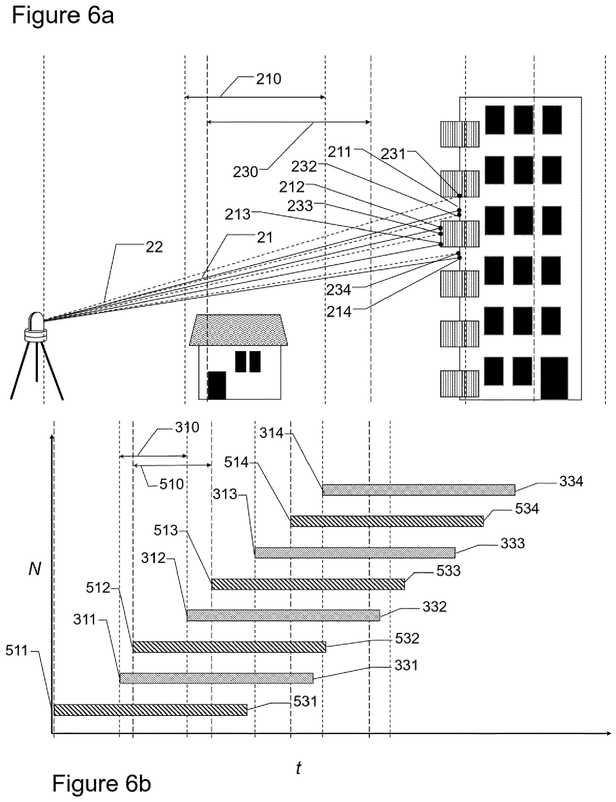

Figures 6a-6d illustrate an assignment of ambiguity zones based on the first and second repetition rates for a portion of the scan where no ambiguity zone change takes place. As was shown in Figure 2e-2f an improper adjustment of the ambiguity zone could happen due to artefacts and has grave consequences. Furthermore, correctly determining the object points reasonably far away from the ambiguity zone changes, wherein reasonably far away might be as low as a few centimeters, with minimal computational resources and in a scalable manner is advantageous for an effective assignment or post-treatment of object points near the ambiguity zone change.

Figure 6a shows an embodiment of the scanning process based on two sets of ambiguity zones defined by the first **210** and the second ambiguity distance **230.** The first scanning pulses of the first pulse train are transmitted along the transmission directions of the first scanning pulses **21.** The second scanning pulses of the second pulse train are transmitted along the transmission directions of the second scanning pulses **22.** The object points **211-214** reflecting the first scanning pulses are located in the same ambiguity zone of the first set of ambiguity zones. The object points **231-234** reflecting the second scanning pulses are located in the same ambiguity zone of the second set of ambiguity zones.

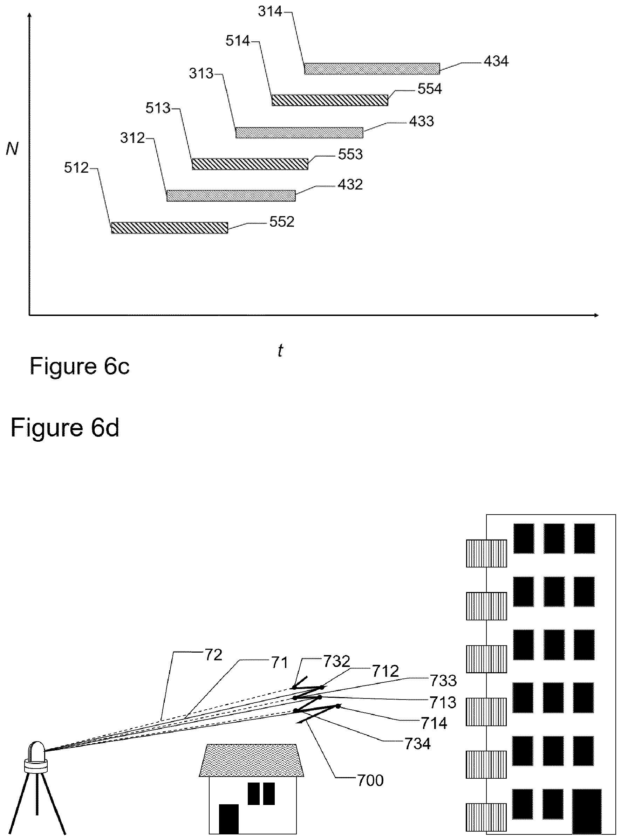

Figure 6b shows a time of flights sequence of first scanning pulses reflected from object points. The transmission events of the first scanning pulses **311-314** follow each other with a regular time interval **310** inversely proportional to the first repetition rate. A time of flights sequence of second scanning pulses reflected from object points is also shown. The transmission events of the second scanning pulses **511-514** follow each other with a regular time interval **510** inversely proportional to the second repetition rate. Since no ambiguity zone change took place, the sequence of the acquisition events **331-334,531-534** corresponds to the transmission events **311-314,511-514.** Figure 6c shows another assignment of the same sequence, wherein the ambiguity zone is incorrectly determined and the incorrect acquisition events **432-434,552-554** are assigned to the transmission events **312-314,512-514.**

Figure 6d shows the resulting point cloud from this assignment. The result looks like if scanning pulses emitted in transmission direction of the first **71** and second scanning pulses **72** would have been reflected from a set of misinterpreted object points **712-714,732-734.** Due to the difference of the first and second ambiguity distances, however object points corresponding to the second pulse train **732-734** have been shifted differently than object points corresponding to the first pulse train **712-714.** The derived object surface **700** immediately shows a well-recognizable zig-zag pattern, or two ghost surfaces, i.e. a clear indication of a mis-assignment of ambiguity zone. Since in the Figure 6a-6d depicted case no ambiguity zone change took place a relatively straightforward computation provides the correct assignment of Figure 6b.

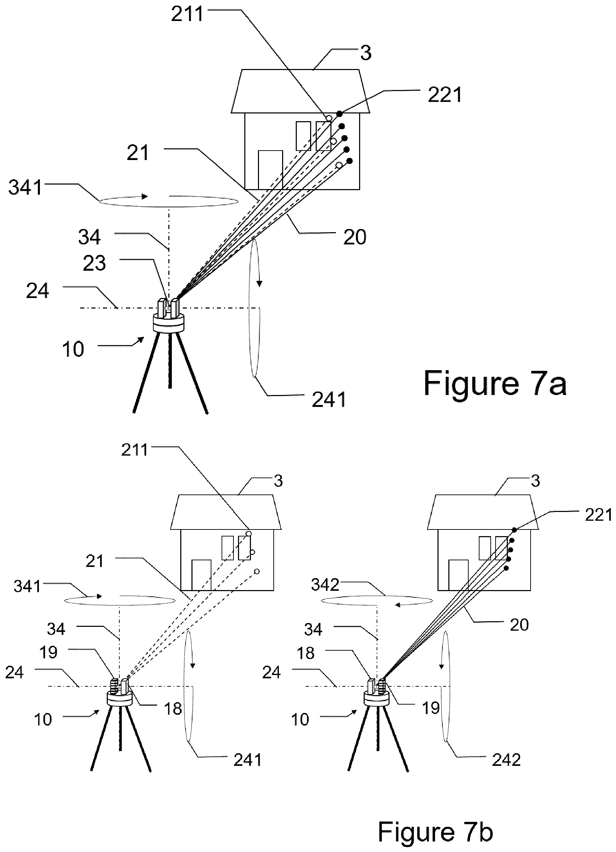

Figure 7a shows a first embodiment of the two-circle scanning strategy. The depicted scanning instrument **10** is configured to be rotatable about a vertical bearing axis **34** with a bearing rotation speed **341,** in particular a constant bearing rotation speed, to provide a bearing rotation for the transmission direction. The scanning instrument **10** also comprises a beam deflection element **23** configured to be rotatable about a horizontal tilting axis **24** with a tilting rotation speed **241** to provide a tilting rotation for the transmission direction. By way of example the tilting rotation speed **241** is at least an order of magnitude higher than the bearing rotation speed **341.** This is a typical setup for scanning instruments, since providing a higher rotation speed for the lighter beam deflection element **23** is easier to realize than for the whole scanning instrument **10.** The present invention is, however not limited to this setup.

The depicted scanning instrument **10** is configured to execute the two-circle scanning strategy according to an aspect of the invention. In the first circle the tilting angle is rotated with a constant tilting rotation speed **241,** the bearing angle is rotated with a constant bearing rotation speed **341,** and the scanning pulses are transmitted to the transmission directions in the first circle **21** with a first repetition rate. In the second circle the tilting angle is rotated with a constant tilting rotation speed **241,** the bearing angle is rotated with a constant bearing rotation speed **341,** and the scanning pulses are transmitted to the transmission directions in the second circle **20** with a second repetition rate.

The transmitted scanning pulses are reflected from object points **221,211** representing a topography of an object **3.** Due to constant rotation speed, but different repetition rates the object points in the first circle **211** and in the second circle **221** show a different density. While not shown here, it is also clear that the respective ambiguity distances are also different in the two circles. Furthermore, since the tilting rotation speed **241** is at least an order of magnitude faster than the bearing rotation speed **341** the respective object points of the first **211** and the second circle **221** are close to each other, especially when the tilting rotation speed **241** is more that 50x the bearing rotation speed **341,** which leads to an essentially vertical trace of the object points. Thus, an ambiguity zone jump between the first circle and the second circle is unlikely. Furthermore, since each first circle has two neighboring second circles and vice versa, at least for a majority of first and second circles it is possible to execute the MTA-disambiguation. The features of this embodiment are combinable with embodiments shown in Fig. 2a-6d or with similar embodiments, e.g. the first circle might provide anchor points whose distance can be determined unambiguously.

Figure 7b shows an embodiment wherein the first circle is measured at a first face of the scanning instrument **10** and the second circle is measured at a second face of the scanning instrument **10.** To illustrate the "orientation" of the scanning instrument **10,** the left-hand side column **18** was plotted white, while the right-hand side column **19** was plotted hatched. This distinction serves purely didactic reasons and does not indicate any structural differences. The columns might be essentially analogous or structurally/functionally different. As shown the second face has a 180° difference in the bearing or azimuth orientation as compared to the first face. This also has an effect that a second tilting rotation speed **242** can be interpreted as a negative number.

The second circle object points **221** provide information from essentially the same area as the first circle object points **211,** in particular wherein the first **241** and second tilting rotation speeds **242** are orders of magnitude faster than the respective bearing rotation speeds **341,342.** In the depicted embodiment the density in the first **211,** and the second circle object points **221** are different. In some embodiments the second tilting rotation speed **242** and the second bearing rotation speed **342** are adjusted such that the density of the object points is equal in both circles. Alternatively or additionally, the second circle object points **221** might be anchor points whose distance from the scanning instrument **10** might be determined unambiguously.

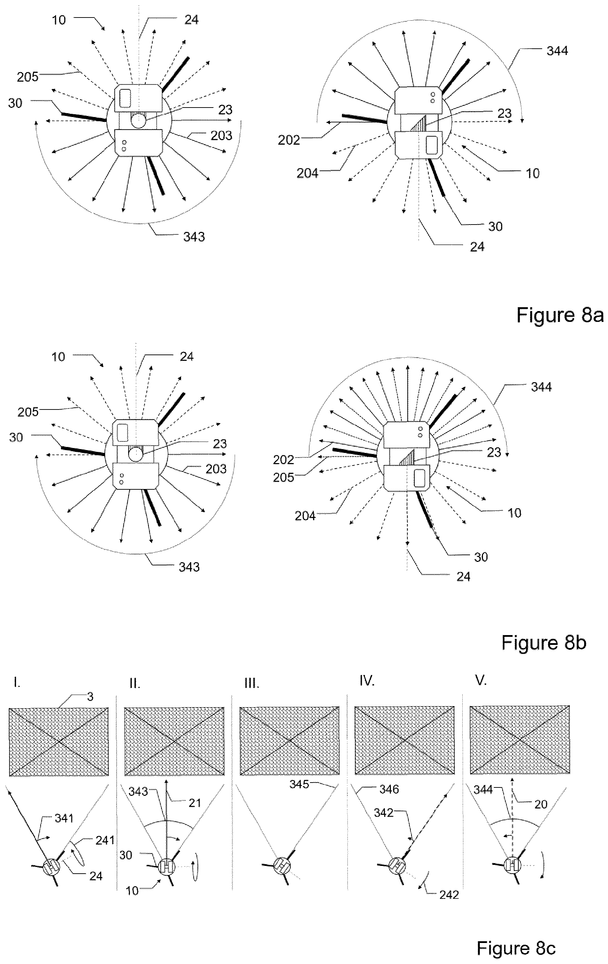

Figure 8a shows a schematic of a first two-face scanning strategy. The scanner **10** is shown from a top view. The scanner **10** comprises a rotating mirror **23** configured to rotate about a tilting axis **24,** in particular with at least 100 Hz, while the scanner is mounted rotatably on a base **30.** The left panel shows the scanning process in the first bearing angle range **343.** The scanner **10** transmits the scanning pulses along the transmission directions in the first circle. The first circle can be divided to a first face (e.g. 0°-180° from the nadir) and a second face (180°-360° from the nadir). The transmission directions in the first circle in the first face **203** are marked as solid line, while the transmission directions in the first circle in the second face **205** are marked as dashed lines. By way of example only the essentially horizontal transmission directions are shown. Since the object are typically near the horizon such transmission directions are the most significant for a real scanning process. The person skilled in the art also understands that the bearing angle difference between the transmission directions is also exaggerated for transparency reasons.

The right panel shows the scanning process in the second bearing angle range **344.** The scanner **10** transmits the scanning pulses along the transmission directions in the second circle. The transmission directions in the second circle in the first face **202** are marked as solid line, while the transmission directions in the second circle in the second face **204** are marked as dashed lines. As can be seen the transmission directions in the second circle in the first face **202** are substantially identical with the transmission directions in the first circle in the second face **205.** The first bearing angle range **343** and the second bearing angle range **344** are essentially cover the whole 360° range. A key advantage of the method is that each object point is visited twice during a scanning, which allows a straightforward verification of the MTA-disambiguation.

Figure 8b shows a schematic of a second two-face scanning strategy with interleaved first and second circles. The key difference as compared to Figure 8a is the fact that the transmission directions in the second circle in the first face **202** are in an intermediate position between two respective transmission directions in the first circle in the second face **205.** A key advantage of this method is the fact that the second circles provide further object points not comprised by the first circles, thus the resolution of the scanning is higher and/or the acquisition time is shorter as compared to the strategy of Figure 8a. Particularly using such scan strategy the scanning can be performed with double bearing angle rotation speed. Or in other words, after half of the scan time already the complete 360° of the scenery is captured. The point density of such scans is lower, i.e. a half of that, than a standard strategy. A lower point density typically carries no disadvantage for preview scans, shown to the operator on the field e.g. for designating regions of interest, tagging, identifying gaps or obscured areas, or planning the scan strategy in general. In such cases, a reduced amount of data is more of an advantage, which provides an additional timesaving by reducing the computing effort on top of the time saved by the double-speed scanning.

Figure 8c depicts a schematic embodiment of windowed scan, wherein the first bearing angle range **343** covers a range of less than 180° extent and the second bearing angle range **344** covers the same range as the first bearing angle range **343.** Such scanning strategy might be utilized if detailed scan is required or desired form a specific object **3** in the environment.

In the first measurement phase (stages I-II) the scanning instrument **10,** shown in a top view, rotates relative to the base **30** with a first bearing rotation speed **341,** while the beam deflection element e.g. rotating mirror, rotates around a tilting axis **24** with a first tilting rotation speed **241.** The scanning pulses are transmitted to the transmission directions in the first circle **21** with a first repetition rate. By way of example the first bearing rotation in the first circle are depicted as clockwise and tilting rotations in the first circle are depicted as counterclockwise rotation. The respective first tilting **241** and bearing rotations speeds **341** might be constant in the whole first measurement phase, in particular chosen such that they provide an isotropic distribution of object points. When the bearing angle reaches the end **345** of the first range **343** the bearing rotation stops (III). By way of example in the here depicted embodiment the tilting rotation and transmission of scanning pulse also stopped. This allows an adjustment of the tilting rotation speed **241,242** and its direction, i.e. from clockwise to counterclockwise and vice versa.

In the second measurement phase (stages III-IV) the scanning instrument **10** rotates relative to the base **30** with a second bearing rotation speed **342,** while the beam deflection element rotates with a second tilting rotation speed **242.** The scanning pulses are transmitted to the transmission directions in the second circle **20** with a second repetition rate. The bearing rotation changed a direction to cover the second measurement range **344** backwards. The invention is also applicable to the cases when the scanning instruments **10** returns to the pose at the start of the first measurement phase and performs the second measurement phase in the same direction as the first measurement phase. The second bearing rotation speed **342** is different from the first bearing rotation speed **341.** In the depicted example it is lower, while the second tilting rotation speed **242** and the second repetition rate are adjusted accordingly, in particular to provide the same lateral resolution as in the first measurement phase. In the depicted embodiment the tilting rotation in the second circle has the same direction as the tilting rotation in the first circle. The invention is equally applicable to cases wherein tilting rotation changes direction. When the bearing angle reaches the end **346** of the second range **344** the bearing rotation stops.

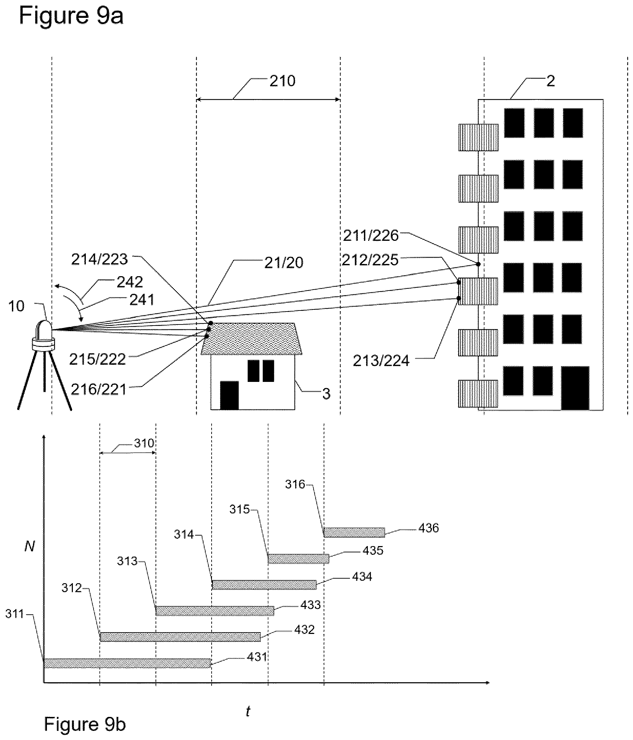

Figure 9a shows a schematic depiction of a two-phase scanning strategy of an environment comprising objects **2,3** in different ambiguity zones. In the first phase the scanner **10** transmits the scanning pulses along the transmission directions in the first circle **21.** The transmission direction in the first circle is rotated by a first tilting rotation speed **241** and direction. In the second phase the scanner **10** transmits the scanning pulses along the transmission directions in the second circle **20.** The transmission direction in the second circle is rotated by a second tilting rotation speed **242** and direction. For reasons of transparency no bearing rotation is shown on this depiction. For reasons of transparency the ambiguity distances **210** of the first and second circle are shown to be essentially similar, the skilled person understands that this serves a didactic purpose and the ambiguity distances of the first and second circle are different according to the invention. The object points in the first circle **211-216** are the same as the object points in the second circle **221-226.** The invention is applicable if the two set of object points are different. Due to the different direction of the tilting rotation the object points in the first circle **211-216** are scanned in a different order than the object points in the second circle **221-226.** The ambiguity zone jump between object points **213** and **214** in the first circle is a far-to-near jump. The ambiguity zone jump between object points **223** and **224** in the second circle is a near-to-far jump.

Figure 9b depicts a sequence of transmission events **311-316** of the scanning pulses in the first circle shown in Figure 9a and acquisition events **431-436** assigned to the transmission events **311-316** based on their sequence order. The first circle depicted in Figure 9a comprises a far-to-near ambiguity zone jump. Due to a pulse overtaking acquisition events **433** and **434** take place within the time interval **310** inversely proportional to the repetition rate of the scanning pulses.

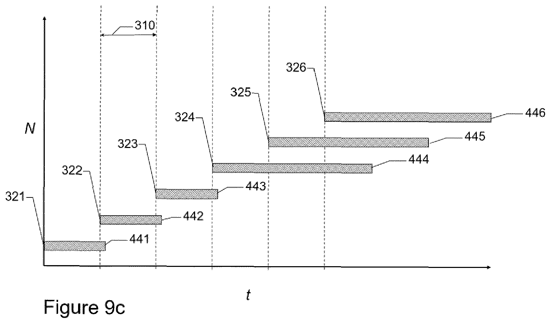

Figure 9c depicts a sequence of transmission events **321-326** of the scanning pulses in the second circle shown in Figure 9a and acquisition events **441-446** assigned to the transmission events **321-326** based on their sequence order. The second circle depicted in Figure 9a comprises a near-to-far ambiguity zone jump. Due to that a still period between acquisition events **433** and **434** exceed the time interval **310** inversely proportional to the repetition rate of the scanning pulses. By recording and correlating, in particular based on angle readings, the still periods with the respective pulse overtaking events the ambiguity zone jumps might be characterized. By recording and evaluating the length of the still period the extent of the ambiguity zone jumps might be determined.

Although the invention is illustrated above, partly with reference to some specific embodiments, it must be understood that numerous modifications and combinations of different features of the embodiments can be made. All of these modifications lie within the scope of the appended claims.

## Claims

1. A terrestrial multiple-time-around, MTA, scanning instrument (10) being configured to provide a point cloud representing an environment (1), the scanning instrument (10) comprising
- a light pulse source (11,12) being configured to generate pulse trains comprising scanning pulses with corresponding repetition rates,
- a transmission unit being configured to transmit the scanning pulses of a pulse train along respective transmission directions(20-22), the transmission unit comprising
∘ a beam deflection element (23) for varying the transmission direction at least by a rotation about a rotation axis,
∘ angle sensors (26,36) for providing data regarding the respective transmission directions (20-22) of the transmitted scanning pulses,
∘ elements for providing respective transmission times of the transmitted scanning pulses,
- an acquisition unit (81) being configured to acquire scanning pulses of the pulse train reflected from object points (211-226) in the environment (1), wherein for each acquisition event (431-446) an acquisition time is assigned,
- an evaluation unit being configured to
∘ assign to each transmission event (311-326) the respective transmission directions and times,
∘ assign the acquisition events (431-446) to the respective transmission events (311-326) based on an MTA disambiguation,
∘ derive coordinates of the object points (211-226) based on the assignment of the acquisition events (431-446) to the respective transmission events (311-326),
∘ provide the point cloud representing the environment (1) based on the object points (211-226),
**characterized in that**
the scanning instrument (10) is configured to carry out a scanning process comprising
- in a first circle
∘ rotating the transmission direction with a first rotation speed, and
∘ generating and transmitting scanning pulses of a first pulse train with a first repetition rate, wherein a first ambiguity distance (210) defined by the first repetition rate is less than an envisaged measurement range,
- in a second circle
∘ rotating the transmission direction with a second rotation speed, and
∘ generating and transmitting scanning pulses of a second pulse train with a second repetition rate, wherein the second repetition rate is different from the first repetition rate,
wherein the MTA disambiguation utilizes the first and second repetition rates.

2. The terrestrial scanning instrument (10) according to claim 1, wherein
- the scanning instrument (10) is configured to be mounted rotatably on a base unit (30), wherein the base unit (30) configured to provide bearing rotation about a bearing rotation axis (34) for the transmission directions,
- the beam deflection element (23) is embodied as a rotatable mirror providing a tilting rotation about a tilting rotation axis (24) for the transmission directions,
- the scanning instrument (10) configured to carry out a scanning process comprising
∘ in the first circle rotating the transmission direction with a first bearing rotation speed (341) and a first tilting rotation speed (241), and
∘ in the second circle rotating the transmission directions with a second bearing rotation speed (342) and a second tilting rotation speed (242), in particular wherein each of the tilting rotation speeds (241,242) are least ten times higher than the respective bearing rotation speeds (341,342).

3. The terrestrial scanning instrument (10) according to claim 2, wherein
- the second bearing rotation speed (342) is equal to the first bearing rotation speed (341),
- the second tilting rotation speed (242) is equal to the first tilting rotation speed (241), and
- the second circle is immediately subsequent to the first circle.

4. The terrestrial scanning instrument (10) according to claim 2, wherein
- a ratio of the first tilting rotation speed (241) to the second tilting rotation speed (242) is equal to a ratio of the second repetition rate to the first repetition rate, and
- a ratio of the first bearing rotation speed (341) to the second bearing rotation speed (342) equal to the ratio of the second repetition rate to the first repetition rate in the,
in particular, wherein
- a bearing angle difference between the first circle and the second circle is 180°, or
- a bearing angle difference between the first circle and the second circle is less than the bearing angle difference of any two first circles.

5. The terrestrial scanning instrument (10) according to claim 4, wherein
- a direction of the tilting rotation in the first circle is opposite to a direction of the tilting rotation in the second circle, and
- the MTA disambiguation further comprises an ambiguity zone change test on the basis the different direction of the tilting rotation in the first and the second circle.

6. The terrestrial scanning instrument (10) according to any one of the preceding claims, wherein a second circle ambiguity distance defined by the second repetition rate is more than the envisaged measurement range.

7. The terrestrial scanning instrument (10) according to any one of the preceding claims, wherein the light pulse source (11,12) comprises a modulation unit being configured to generate scanning pulse shift signal, and at least one of the first or second pulse trains is non-periodic and the respective transmission events (311-326) are shifted by the generated pulse shift signal.

8. A method of MTA disambiguation for a terrestrial scanning instrument (10), in particular a terrestrial scanning instrument according to any one of the claims 1 to 7, comprising
- in a first circle,
∘ rotating a transmission direction with a first rotation speed,
∘ generating and transmitting scanning pulses of a first pulse train with a first repetition rate in the first circle, wherein a first ambiguity distance (210) defined by the first repetition rate is less than an envisaged measurement range,
- in a second circle
∘ rotating a transmission direction with a second rotation speed,
∘ generating and transmitting scanning pulses of a second pulse train with a second repetition rate,
- assigning to each transmission event (311-326) respective transmission directions and times,
- acquiring return pulses, and
- assigning acquisition events (431-446) to the respective transmission events (311-326) based on an MTA disambiguation, wherein the MTA disambiguation utilizes the first and second respective repetition rates.

9. The method according to claim 8, wherein the method further comprises a first measurement phase and a second measurement phase, wherein
- the first measurement phase comprises a generation of the first circles by
∘ rotating a bearing angle of the transmission direction in a first bearing angle range with a first bearing rotation speed (341), and
∘ rotating a tilting angle of the transmission direction with a first tilting rotation speed (241),
- the second measurement phase comprises a generation of the second circles by
∘ rotating the bearing angle of the transmission direction in a second bearing angle range (344) with a second bearing rotation speed (342), and
∘ rotating the tilting angle of the transmission direction with a second tilting rotation speed (242),
- the second bearing (342) and tilting rotation speeds (242) are different from the first bearing (341) and tilting rotation speeds (241) such that
∘ a ratio of the first tilting rotation speed (241) to the second tilting rotation speed (242) is equal to a ratio of the second repetition rate to the first repetition rate, and
∘ a ratio of the first bearing rotation speed (341) to the second bearing rotation speed (342) is equal to the ratio of the second repetition rate to the first repetition rate.

10. The method according to claim 9, wherein the first bearing angle range (343) covers a range of less than 180° extent, and the second bearing angle range (344) covers the same range as the first bearing angle range (343).

11. The method according to claim 9, wherein
- the first bearing angle range (343) comprises a range of at least 170° extent,
- the second bearing angle range (344) comprises a range of at least 170° extent not covered by the first bearing angle range (343),
- for each first circle a corresponding second circle is definable, wherein a bearing angle difference between the first and the corresponding second circle is 180°.

12. The method according to claim 9, wherein
- the first bearing angle range (343) comprises a range of at least 170° extent,
- the second bearing angle range (344) comprises a range of at least 170° extent not covered by the first bearing angle range (343),
- for each first circle a neighboring second circle is definable, wherein a bearing angle difference between the first circle and the neighboring second circle falling in the range of 180° and 180° plus the bearing angle difference between two neighboring first circles, in particular a half of the angle difference between two neighboring first circles.

13. The method according to any one of claims 9 to 12, wherein
- a direction of the tilting rotation in the first measurement phase is opposite to a direction of the tilting rotation in the second measurement phase, and
- the MTA disambiguation further comprises an ambiguity zone change test on the basis of the different direction of the tilting rotation in the first and the second measurement phases.

14. The method according to any of claims 9 to 13, wherein a second ambiguity distance (230) defined by the second repetition rate is more than the envisaged measurement range,
in particular, wherein the method further comprises
- defining a convex unambiguous area such that for each second circle object points (221-226) within the convex unambiguous area the distance of second circle object points (221-226) to the scanning instrument (10) falling within the same ambiguity zone, and
- assigning scanning pulses in the first circle reflected from an angular range corresponding to the convex unambiguous area to the ambiguity zone defined by the distance of second circle object points (221-226) within the convex unambiguity zone to the scanning instrument (10).

15. A computer program product for a scanning or profiling system, which when executed by a computer, in particular the evaluation unit of a scanning instrument (10) according to any of the claims 1 to 7 causes the automatic execution of computational steps of the multiple time-around disambiguation method according to any one of the claims 8 to 14.
